(19) Europäisches Patentamt

European Patent Office

Office européen des brevets

(11) **EP 1 672 585 A1**

(12) **DEMANDE DE BREVET EUROPEEN**

(43) Date de publication:
**21.06.2006 Bulletin 2006/25**

(51) Int Cl.:
**G06T 7/20** (2006.01)

(21) Numéro de dépôt: **05292588.0**

(22) Date de dépôt: **06.12.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **14.12.2004 FR 0413285**

(71) Demandeur: **STMICROELECTRONICS SA**
**92120 Montrouge (FR)**

(72) Inventeur: **Mellot, Pascal**
**38250 Lans en Vercors (FR)**

(74) Mandataire: **Verdure, Stéphane**
**Cabinet Plasseraud**
**65/67 rue de la Victoire**
**75440 Paris Cedex 09 (FR)**

(54) **Procédé, dispositif et système de traitement d'images par estimation de mouvement**

(57) Dans un procédé d'estimation de mouvement pour traiter des images se succédant dans une séquence d'images déterminées, on associe un vecteur de mouvement à chacune des images traitées. Pour une image courante, on sélectionne (201) de vecteurs de mouvement respectivement associés à des images précédant l'image courante dans la séquence. Puis, on génère (202) des vecteurs de mouvement candidats à partir desdits vecteurs de mouvement sélectionnés. On élit (203) ensuite un vecteur de mouvement parmi lesdits vecteurs de mouvement candidats. On mémorise (204) une information associant le vecteur de mouvement élu à l'image courante. Au moins l'un des vecteurs de mouvement candidats est un vecteur d'accélération généré à partir de l'accélération entre un premier et un second vecteurs de mouvement moyennés relativement à une première et une seconde images distinctes précédant l'image courante dans la séquence.

FIG.2.

201 — SÉLECTIONNER DES VECTEURS DE MOUVEMENT ASSOCIÉS À DES IMAGES PRÉCÉDANTES

202 — GÉNÉRER DES VECTEURS DE MOUVEMENT CANDIDATS, AU MOINS UN VECTEUR CANDIDAT ÉTANT GÉNÉRÉ À PARTIR D'UNE ACCÉLÉRATION

203 — ÉLIRE UN VECTEUR DE MOUVEMENT

204 — MÉMORISER UNE ASSOCIATION VECTEUR ÉLU ET IMAGE COURANTE

EP 1 672 585 A1

**EP 1 672 585 A1**

**Description**

La présente invention est relative aux procédés d'estimation de mouvement adaptés pour traiter une séquence d'images, notamment une séquence d'images générées à partir d'images fournies par un capteur d'images en mouvement, pour détecter le mouvement d'une entité pourvue de ce capteur d'images.

Nombreux sont les systèmes qui utilisent des procédés d'estimation de mouvement.

Ainsi, dans certains systèmes de traitement d'images vidéo ou film, le débit d'images réelles (nombre d'images par seconde) est insuffisant pour un affichage de qualité. Par conséquent, des images supplémentaires sont générées. Il peut être avantageux de générer de telles images supplémentaires en appliquant un procédé d'estimation du mouvement des objets dans les images réelles.

De tels procédés sont classiquement utilisés également dans des systèmes de compression de données vidéo, comme par exemple des systèmes basés sur la norme MPEG. De tels systèmes permettent de réduire la quantité des données d'image à transmettre ou à mémoriser en compressant ces données, afin de permettre leur transfert rapide sur des réseaux numériques ou encore des lignes téléphoniques ou leur enregistrement sur des médias numériques. En pratique, seules certaines images de référence sont codées, et des vecteurs de mouvement sont générés, qui codent le mouvement d'objets entre les images codées et les images supprimées. Les images codées et les vecteurs de mouvement sont transmises puis, côté réception, les images intermédiaires manquantes sont déduites à partir des vecteurs de mouvement.

Le domaine qui intéresse plus particulièrement l'invention est celui des systèmes informatiques comprenant une entité pourvue d'un capteur d'images et dans lesquels les images captées sont traitées pour déterminer le mouvement de l'entité.

On connaît ainsi les systèmes informatiques dans lesquels un ordinateur est relié à une souris. De tels systèmes sont basés sur une détection des mouvements de la souris. Lorsque la souris est une souris optique, on détecte généralement le mouvement de la souris sur la base d'informations captées par un capteur vidéo ou un autre type de capteur qui est fixé sur la souris optique.

De tels capteurs fournissent un signal numérique sous la forme d'une séquence d'images captées lors du déplacement de la souris. Ce signal numérique est alors traité afin d'en déduire le mouvement de la souris.

Généralement, on déplace la souris sur une surface adaptée et le capteur vidéo fixé sur la souris capture des images de cette surface pendant son mouvement. Le mouvement de la souris peut alors être reconstruit à partir des positions relatives des images capturées successives. On génère donc une séquence d'images à partir de la séquence d'images reçue du capteur, la position relative de la souris étant représentée sur chaque image de la séquence ainsi générée. Puis, à partir du déplacement relatif de la souris correspondant à deux images successives, on en déduit le déplacement qui peut être donné au pointeur de la souris sur l'écran de l'ordinateur.

Mais, un tel traitement d'images est complexe. Il requiert des calculs puissants et il est de ce fait coûteux.

Afin de rendre l'affichage du pointeur de la souris optique plus facilement réalisable, il est avantageux d'appliquer un procédé d'estimation de mouvement à un tel contexte.

De manière générale, avec un tel procédé, les images à traiter sont divisées en blocs de pixels et on fait l'hypothèse que chaque bloc se retrouve sensiblement à l'identique d'une image à l'autre, même s'il y a eu un mouvement de ce bloc entre deux images.

Un tel procédé permet d'estimer le mouvement d'un bloc de pixels donné depuis une image vers une image suivante. Cette estimation de mouvement bloc par bloc est généralement représentée par un vecteur de mouvement qui est associé à chacun des blocs d'une image. Ce dernier représente le mouvement d'un bloc de pixels d'une image à l'autre. Il a une composante verticale et une composante horizontale, représentant le déplacement qui doit être appliqué à un bloc d'une image précédente pour arriver à la position d'un bloc de pixels sensiblement identique dans une image suivante.

Dans le cas où la séquence d'images à traiter provient d'un capteur d'images en mouvement sur une surface donnée, le mouvement de tous les blocs de pixels de chaque image à traiter peut être représenté par un seul vecteur de mouvement.

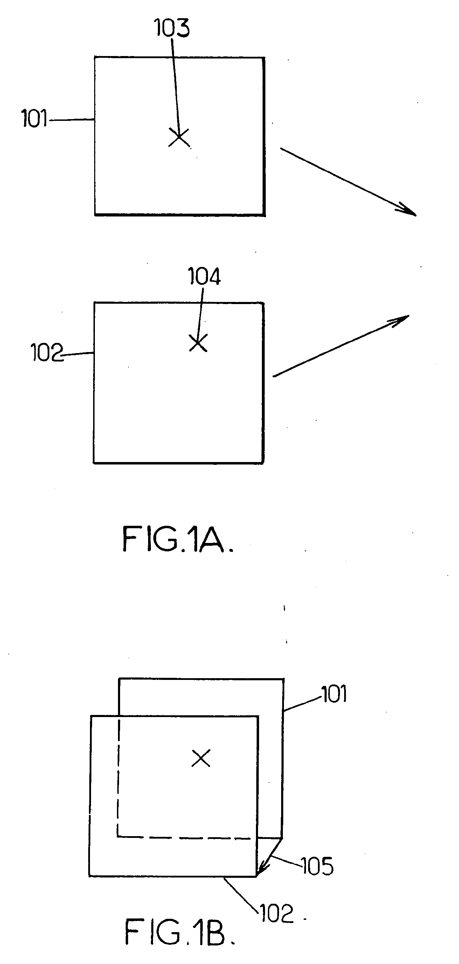

Les figures 1-A et 1-B illustrent une définition d'un vecteur de mouvement. Sur la figure 1-A, une séquence de deux images est représentée, une première image 101 est suivie d'une seconde image 102. Sur chacune de ces images est indiquée la position de la souris. Ainsi, sur la première image 101, la souris est en position 103, et sur la seconde image, la souris est en position 104.

Sur la figure 1-B, les images 101 et 102 sont superposées de telle sorte que les positions respectives de la souris coïncident. Le vecteur de mouvement correspondant à un tel déplacement est représenté par la flèche 105. Ses composantes suivant l'horizontale et suivant la verticale sont nommées X et Y. Ainsi, le mouvement de la souris entre l'image 101 et l'image 102 peut être représenté dans la suite par le vecteur de mouvement 105. On peut ainsi associer à l'image 101 le vecteur de mouvement 105 qui permet de retrouver la position de la souris dans l'image 102 suivante.

Afin d'estimer le mouvement de la souris associé dans une image courante, on se base généralement sur des vecteurs de mouvement précédemment associés à des images précédentes dans la séquence d'images. Puis, à partir de tels vecteur de mouvement, on génère des vecteurs candidats, c'est-à-dire des vecteurs qui sont susceptibles de représenter le mouvement de la souris entre deux images successives. Ensuite, on vérifie la pertinence de chacun des vecteurs candidats par des calculs de corrélation de position de la souris, bien connus de l'homme du métier. Le vecteur candidat élu est le vecteur pour lequel on calcule la plus grande corrélation.

En résumé, pour une image en cours de traitement, on génère des vecteurs candidats puis on calcule une corrélation de chacun de ces vecteurs candidats afin d'élire le vecteur candidat qui présente la meilleure corrélation calculée.

Les termes « image traitée » font référence à des images pour lesquelles un vecteur de mouvement a été élu. Le vecteur élu est alors associé à l'image respective.

Afin de générer des vecteurs candidats adaptés, on sélectionne donc généralement des vecteurs de mouvement parmi des vecteurs de mouvement précédemment associés à des images précédentes. Pour ce faire, chaque association d'une image et du vecteur de mouvement respectif élu est mémorisée.

Toutefois, lorsque les vecteurs de mouvement candidats ne sont pas pertinents, même si on élit celui qui présente la meilleure corrélation, un tel système peut diverger. Une telle divergence apparaît souvent en cas de mouvement brusque de la souris.

Ainsi, la performance des dispositifs appliquant un procédé d'estimation de mouvement est grandement dépendante de la qualité des vecteurs de mouvement candidats. Par conséquent il est souhaitable de disposer d'une méthode de génération de vecteurs candidats qui soit efficace et précise.

La présente invention vise à satisfaire ces besoins.

Un premier aspect de l'invention propose ainsi un procédé d'estimation de mouvement pour traiter des images se succédant dans une séquence d'images déterminées, suivant lequel on associe un vecteur de mouvement à chacune des images traitées.

Le procédé comprend pour une image courante, les étapes de :

- sélection d'un nombre i de vecteurs de mouvement respectivement associés à i images précédant l'image courante dans ladite séquence, i étant un entier strictement supérieur à 1 ;
- génération de vecteurs de mouvement candidats à partir desdits vecteurs de mouvement sélectionnés;
- élection d'un vecteur de mouvement parmi lesdits vecteurs de mouvement candidats;
- mémorisation d'une information associant le vecteur de mouvement élu à l'image courante ;

Au moins l'un des vecteurs de mouvement candidats est un vecteur d'accélération généré à partir de l'accélération entre d'une part un premier vecteur moyenné relativement à une première image et d'autre part un second vecteur de mouvement moyenné relativement à une seconde image.

Les première et seconde images sont de préférence distinctes et précèdent l'image courante dans la séquence. Un vecteur de mouvement moyenné relativement à une image donnée est un vecteur de mouvement obtenu à partir des vecteurs de mouvement sélectionnés associés à des images précédant l'image donnée.

Dans un mode de réalisation de la présente invention, dans l'étape de sélection, on peut sélectionner le premier et le second vecteurs de mouvement respectivement associés à la première et la seconde images précédant l'image courante dans la séquence d'images, la première image étant l'image précédant directement l'image courante et la seconde image étant l'image précédant directement ladite première image.

Dans ce cas, l'étape de génération comprend le calcul d'une différence entre lesdits premier et second vecteurs de mouvement associés pour obtenir l'accélération entre lesdits premier et second vecteurs de mouvement.

A l'étape de sélection, on peut également sélectionner un nombre entier déterminé i de vecteurs de mouvement respectivement associés à i images précédant l'image courante dans la séquence d'images. Dans ce cas, à l'étape de génération, on peut calculer, d'une part, un premier vecteur de mouvement moyenné relativement à la première image, et, d'autre part, un second vecteur de mouvement moyenné relativement à la seconde image, sur la base de tout ou partie desdits vecteurs de mouvement sélectionnés.

L'étape de génération comprend alors le calcul d'une différence entre le premier vecteur de mouvement moyenné et le second vecteur de mouvement moyenné pour obtenir l'accélération entre lesdits premier et second vecteur de mouvement.

On peut également additionner le premier vecteur de mouvement et l'accélération pour obtenir le vecteur de mouvement candidat correspondant au vecteur d'accélération.

Dans un mode de réalisation de la présente invention, à l'étape de sélection, on sélectionne un nombre entier déterminé k de vecteurs de mouvement respectivement associés à k images précédant l'image courante dans la séquence d'images.

Dans ce cas, l'étape de génération comprend le calcul d'une moyenne de tout ou partie desdits k vecteurs de mouvement sélectionnés pour obtenir un vecteur de mouvement candidat moyenné.

On peut également, à l'étape de sélection, sélectionner un nombre entier déterminé m de vecteurs de mouvement associés à m images précédant l'image courante. On définit alors avantageusement un vecteur de bruit. On peut alors avantageusement additionner chacun des vecteurs de mouvement sélectionnés au vecteur de bruit.

On obtient alors, pour chaque vecteur de mouvement sélectionné, un vecteur de mouvement bruité respectif. Puis, l'étape de génération comprend en outre le calcul d'une moyenne des vecteurs de mouvement bruités respectifs pour obtenir un vecteur de mouvement candidat moyenné.

Avantageusement, l'un des vecteurs de mouvement candidats correspond à un vecteur de mouvement nul.

Un second aspect de l'invention propose un dispositif d'estimation de mouvement pour traiter des images se succédant dans une séquence d'images déterminées. Dans un tel dispositif, on associe un vecteur de mouvement à chacune des images traitées. Le dispositif comprend :

- une unité de sélection pour sélectionner des vecteurs de mouvement respectivement associés à des images précédant une image courante dans ladite séquence;
- une unité de génération de vecteurs de mouvement candidats à partir desdits vecteurs de mouvement sélectionnés;
- une unité d'élection pour élire un vecteur de mouvement parmi lesdits vecteurs de mouvement candidats;
- une mémoire pour mémoriser une information associant le vecteur de mouvement élu à l'image courante.

Avantageusement, l'unité de génération est adaptée pour générer des vecteur de mouvement candidats comprenant au moins un vecteur d'accélération généré à partir de l'accélération entre d'une part un premier vecteur de mouvement moyenné relativement à une première image et d'autre part un second vecteur de mouvement moyenné relativement à une seconde image. Les première et seconde images sont de préférence distinctes et précèdent l'image courante dans la séquence.

L'unité de sélection peut en outre être adaptée pour sélectionner le premier et le second vecteurs de mouvement respectivement associés à la première et la seconde images précédant l'image courante dans la fréquence d'images, la première image étant l'image précédant directement l'image courante et la seconde image étant l'image précédant directement ladite première image.

Dans ce cas, l'unité de génération peut être adaptée pour calculer une différence entre les premier et second vecteurs de mouvement moyennés relativement aux première et secondes images pour fournir l'accélération entre les premier et second vecteurs de mouvement moyennés.

L'unité de sélection peut également être adaptée pour sélectionner un nombre entier déterminé i de vecteurs de mouvement associés à i images précédant l'image courante dans la séquence d'images.

Puis, l'unité de génération peut être adaptée pour calculer, d'une part, un premier vecteur de mouvement moyenne relativement à la première image, et, d'autre part, un second vecteur de mouvement moyenne relativement à la seconde image, sur la base de tout ou partie des vecteurs de mouvement sélectionnés pour en déduire une différence entre le premier vecteur de mouvement moyenné et le second vecteur de mouvement moyenné et fournir l'accélération entre lesdits premier et second vecteurs de mouvement.

Puis, en additionnant le premier vecteur de mouvement et l'accélération, l'unité de génération peut générer le vecteur de mouvement candidat correspondant au vecteur d'accélération.

Dans un mode de réalisation, l'unité de sélection est adaptée pour sélectionner un nombre entier déterminé k de vecteurs de mouvement respectivement associés à k images précédant l'image courante dans la séquence d'images; et

l'unité de génération est adaptée pour calculer une moyenne de tout ou partie desdits k vecteurs de mouvement sélectionnés afin de générer un vecteur de mouvement candidat moyenné.

L'unité de sélection peut également être adaptée pour sélectionner un nombre entier déterminé m de vecteurs de mouvement associés à m images précédant l'image courante dans la séquence.

Puis, l'unité de génération peut être adaptée pour additionner chacun des vecteurs de mouvement sélectionnés à un vecteur de bruit déterminé, afin de générer, pour chaque vecteur de mouvement sélectionné, un vecteur de mouvement bruité respectif; et pour fournir une moyenne desdits vecteurs de mouvement bruités respectifs afin de générer un vecteur de mouvement candidat moyenné.

Un troisième aspect de l'invention propose un système d'estimation de mouvement comprenant un dispositif d'estimation de mouvement selon le deuxième aspect de l'invention et une entité mobile pourvue d'un capteur d'images.

Un quatrième aspect de l'invention propose un procédé de poursuite de trajectoire d'un capteur mobile sur la base d'images d'un environnement fixe générées par ledit capteur. Le procédé comprend les étapes du procédé selon le premier aspect de la présente invention.

Un cinquième aspect de l'invention propose un dispositif de poursuite de trajectoire d'un capteur mobile comprenant des moyens adaptés pour mettre en oeuvre le procédé selon le quatrième aspect.

Un sixième aspect de l'invention propose un système de poursuite de trajectoire d'un capteur mobile comprenant un dispositif d'estimation de mouvement selon le cinquième aspect et une entité mobile pourvue d'un capteur d'images.

Un septième aspect de l'invention propose une souris optique comprenant un capteur mobile d'images et un dispositif d'estimation de mouvement adaptés pour coopérer afin de mettre en oeuvre le procédé selon le quatrième aspect.

Un huitième aspect de l'invention propose un produit « programme d'ordinateur » chargeable directement dans la mémoire interne d'un ordinateur numérique, comprenant des portions de code de logiciel pour l'exécution des étapes du procédé selon le premier aspect ou le second aspect.

La présente invention couvre tout type de dispositif et de système mettant en oeuvre un procédé d'estimation de mouvement. Par exemple, un tel procédé peut avantageusement être mis en oeuvre dans notamment, les systèmes comprenant un stylo optique.

Un quatrième aspect de l'invention propose un produit « programme d'ordinateur » chargeable directement dans la mémoire interne d'un ordinateur numérique, comprenant des portions de code de logiciel pour l'exécution des étapes du procédé selon le premier aspect lorsque ledit programme est exécuté dans l'ordinateur.

D'autres aspects, buts et avantages de l'invention apparaîtront à la lecture de la description d'un de ses modes de réalisation.

L'invention sera également mieux comprise à l'aide des dessins, sur lesquels :

- les figures 1-A et 1-B qui ont déjà été commentées illustrent un vecteur de mouvement dans une application de détection de mouvement d'une souris optique ;
- la figure 2 illustre les principales étapes d'un procédé d'estimation de mouvement selon un mode de réalisation de la présente invention ;
- la figure 3 illustre une génération de vecteur candidat d'accélération selon un mode de réalisation de la présente invention;
- la figure 4 illustre une génération de vecteur candidats basée sur une application de vecteurs de bruit selon un mode de réalisation de la présente invention.

La présente invention est plus particulièrement décrite dans son application aux souris optiques. Bien sûr, il est aisé d'en déduire une application à tout système dans lequel on applique un traitement de séquence d'images pour détecter des mouvements.

Elle peut également être avantageusement mise en oeuvre dans tout type de dispositif dans lequel on applique un procédé d'estimation de mouvement.

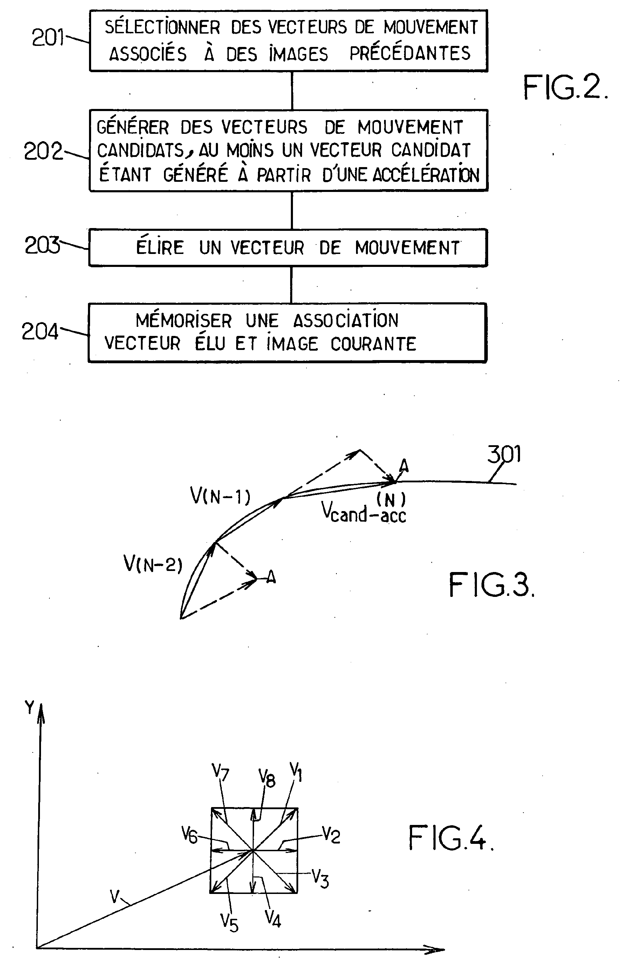

La figure 2 illustre les principales étapes d'un procédé d'estimation de mouvement selon un mode de réalisation de la présente invention.

Ainsi, sur la base d'une sélection 201 de vecteurs de mouvement associés à des images précédentes, qui représentent donc les mouvements de la souris relativement aux images précédentes, on génère des vecteurs de mouvement candidats dans l'étape 202. A cette étape, on prend avantageusement en compte une accélération de vecteur de mouvement. Plus précisément, on génère au moins un vecteur de mouvement candidat d'accélération qui est obtenu à partir d'une accélération de vecteur de mouvement résultant d'une différence entre les vecteurs de mouvement associés à deux images précédentes. On note qu'un « vecteur candidat d'accélération » peut être référencé en tant que « vecteur d'accélération ».

Puis, on élit, à l'étape 203, le vecteur de mouvement le plus adapté pour représenter le mouvement de la souris parmi les vecteurs candidats obtenus à l'étape précédente. Une telle élection peut comprendre dans un mode de réalisation de la présente invention, un calcul de corrélation appliqué à chacun des vecteurs candidats obtenus. Un tel calcul bien connu de l'homme du métier n'est pas détaillé.

On note que les termes «corrélation » font référence à toute méthode de calcul permettant de déduire le meilleur appariement entre deux images. Afin de déterminer la pertinence d'un vecteur candidat relativement à deux images, on translate une des images suivant le vecteur candidat considéré.

Puis, on peut calculer la somme des différences absolues des pixels respectifs des deux images ainsi positionnées.

On peut également corréler ces deux images suivant le vecteur candidat considéré, en calculant la somme des carrés des différences. La présente invention couvre toute méthode de corrélation permettant de déterminer la pertinence d'un vecteur candidat relativement à deux images.

A l'étape 204, on mémorise l'association du vecteur élu et de l'image courante afin de pouvoir sélectionner ce vecteur élu pour appliquer à des images suivantes un tel procédé d'estimation de mouvement.

L'invention couvre différentes variantes de génération de vecteurs candidats dans lesquelles au moins un vecteur candidat est généré à partie d'une accélération de vecteur de mouvement.

Ainsi, parmi les vecteurs candidats générés, au moins un prend en compte une accélération de vecteur de mouvement. Une telle caractéristique permet de réaliser une estimation plus précise et de ce fait d'assurer une meilleure convergence d'un procédé d'estimation de mouvement. Des sections suivantes décrivent différentes méthodes qui permettent d'obtenir des vecteurs de mouvement candidats d'accélération selon l'invention.

Puis, en outre, d'autres vecteurs candidats sont avantageusement générés pour améliorer encore les performances du procédé.

D'autres sections suivantes décrivent plusieurs méthodes pour obtenir des vecteurs candidats pertinents autres que les vecteurs candidats d'accélération.

Il est alors aisé, à partir des vecteurs candidats d'accélération et des autres vecteurs candidats, d'obtenir différentes applications du procédé selon des modes de réalisation de la présente invention. La présente invention couvre tous les procédés pour lesquels on génère un ou plusieurs vecteurs candidats d'accélération et un ou plusieurs autres vecteurs candidats.

On peut donc générer plusieurs vecteurs candidats d'accélération. Par la suite, on note V(N), le vecteur de mouvement associé à l'image N, et $V_{cand-acc}(N)$, un vecteur candidat d'accélération correspondant à la Nème image dans une séquence d'images dans laquelle les images sont référencées successivement par 1, 2, ..., N-2, N-1, N..., où N est un entier naturel strictement positif.

Dans un mode de réalisation de la présente invention, on sélectionne des vecteurs de mouvement associés aux deux images précédant l'image en cours de traitement N. Il est alors intéressant de générer au moins un vecteur candidat d'accélération vérifiant l'équation suivante :

$$V_{cand-acc}(N) = V(N-1) + \Delta;$$

où $\Delta$ est une accélération de vecteur de mouvement vérifiant l'équation suivante :

$$\Delta = [V(N-1) - V(N-2)]$$

La figure 3 illustre la génération d'un tel vecteur candidat d'accélération. Ainsi, la courbe 301 représente la trajectoire de la souris optique. Les vecteurs représentés en traits discontinus illustrent des étapes de calcul. Un vecteur V(N-2) représente le vecteur de mouvement associé à l'image N-2. Un vecteur V(N-1) représente le vecteur de mouvement associé à l'image N-1. Puis, on détermine une accélération $\Delta$ correspondant à la différence entre V(N-1) et V(N-2). Enfin, on obtient un vecteur candidat d'accélération correspondant $V_{cand-acc}(N)$ relativement à l'image N par addition du vecteur associé à l'image N-1 et de l'accélération $\Delta$.

D'autres vecteurs candidats d'accélération peuvent également être pertinents. Pour ce faire, on peut avantageusement sélectionner les vecteurs de mouvements associés à des images plus anciennes dans la séquence d'images considérée.

On peut ainsi sélectionner les vecteurs de mouvement associés à un nombre déterminé i d'images qui précèdent l'image courante. Dans ce cas, on mémorise avantageusement un vecteur de mouvement moyenné relativement à chacune des images N-i à N-1. Un tel vecteur de mouvement moyenné est noté $V_{moy}(N)$ relativement à l'image N. Il peut vérifier par exemple l'équation suivante :

$$V_{moy}(N) = [\sum_{k=1}^{i} V(N-k) + 2] >> 2$$

Un tel vecteur moyenné peut bien sûr être obtenu par différentes équations permettant de combiner les vecteurs de mouvement associés respectivement aux i images précédant l'image courante.

Lorsqu'on choisit i égal à 4 on obtient un compromis intéressant entre le coût engendré par les calculs et les performances d'un tel procédé. Toutefois,

Il peut être avantageux dans certaines applications de considérer des vecteurs moyennés correspondant à des images plus anciennes dans la séquence d'image considérée.

Puis, sur la base de vecteurs moyennés, on peut générer un vecteur candidat d'accélération vérifiant l'équation suivante :

$$V_{cand-acc}(N) = V_{moy}(N-1) + \Delta;$$

où $\Delta$ est une accélération de vecteur de mouvement vérifiant l'équation suivante :

$$\Delta = [V_{moy}(N-1) - V_{moy}(N-2)]$$

Dans un mode de réalisation de la présente invention, des vecteurs de mouvement candidats autres que des vecteurs de mouvements d'accélération sont aussi générés.

On note que le vecteur de mouvement correspondant au vecteur nul est avantageusement généré comme vecteur candidat dans un mode de réalisation de la présente invention. Il permet d'éviter des divergences dans certains cas.

Il est également intéressant de générer un ou plusieurs vecteurs candidats directement à partir des vecteurs de mouvement associés à des images précédant l'image courante. Plus précisément, ces vecteurs candidats sont des vecteurs de mouvement sélectionnés. On peut par exemple, considérer le vecteur de mouvement associé à l'image précédant l'image courante ainsi que le vecteur de mouvement associé à l'image précédant l'image précédente comme étant deux vecteurs candidats. Mais, on peut également considérer des vecteurs de mouvements associés à des images plus anciennes comme étant des vecteurs candidats.

Puis, on peut également générer des vecteurs candidats moyennés tels que ceux qui ont été définis précédemment en référence à la génération de certains vecteurs candidats d'accélération.

Ainsi, on peut générer un vecteur candidat moyenné, noté $V_{cand-moy}(N)$, selon l'équation suivante :

$$V_{cand-moy}(N) = [\sum_{k=1}^{i} V(N-k) + 2] >> 2$$

On note également que lorsqu'on choisit i égal à 4, on obtient un compromis intéressant entre le coût engendré par les calculs et les performances d'un tel procédé.

Dans un mode de réalisation de la présente invention, on génère plusieurs vecteurs candidats moyennés. En effet, on ajoute un vecteur de bruit à un vecteur de mouvement sélectionné afin d'assurer une meilleure convergence du procédé en introduisant du bruit.

Un vecteur de bruit peut être aléatoirement choisi. Dans un mode de réalisation, on définit 8 vecteurs de bruit.

La figure 4 illustre des vecteurs de bruit appliqués à un vecteur de mouvement sélectionné. Avantageusement, on définit ainsi huit vecteurs de bruit, notés $V_1$-$V_8$. On peut alors obtenir un ou plusieurs vecteurs bruités, $V_{bruit}$, pour un vecteur de mouvement sélectionné. En effet, relativement à l'image N-1 par exemple, pour un vecteur de bruit $V_j$, j étant compris entre 1 et 8, on obtient un vecteur de mouvement bruité :

$$V_{bruit,j}(N-1) = V(N-1) + V_j$$

Ainsi, à partir de tout ou partie des vecteurs bruités vérifiant cette dernière équation, il peut également être intéressant de générer des vecteurs candidats moyennés.

Une équation de tels vecteurs de mouvement candidats moyennés peut alors par exemple s'écrire sous la forme suivante :

$$V_{cand-moy}(N) = [\sum_{j} \sum_{k=1}^{i} V_{bruit,j}(N-k) + 2] >> 2$$

De tels vecteurs candidats moyennés peuvent également être utilisés pour générer des vecteurs candidats d'accélération.

L'invention permet une estimation de mouvement plus précise et de ce fait un meilleur rendu du mouvement du pointeur de la souris optique sur un écran, notamment dans le cas de mouvements rapides de la souris. Elle peut avantageusement mise en oeuvre dans tout procédé d'estimation de mouvement.

**Revendications**

**1.** Procédé d'estimation de mouvement pour traiter des images se succédant dans une séquence d'images déterminées, suivant lequel on associe un vecteur de mouvement à chacune des images traitées, le procédé comprenant pour une image courante, les étapes de :

- sélection (201) d'un nombre i de vecteurs de mouvement respectivement associés à i images précédant l'image courante dans ladite séquence, i étant un entier strictement supérieur à 1 ;
- génération (202) de vecteurs de mouvement candidats à partir desdits vecteurs de mouvement sélectionnés;
- élection (203) d'un vecteur de mouvement parmi lesdits vecteurs de mouvement candidats;
- mémorisation (204) d'une information associant le vecteur de mouvement élu à l'image courante ;
et suivant lequel au moins l'un des vecteurs de mouvement candidats est un vecteur d'accélération généré à partir de l'accélération entre d'une part un premier vecteur de mouvement moyenné relativement à une première image et d'autre part un second vecteur de mouvement moyenné relativement à une seconde image ;
lesdites première et seconde images étant distinctes et précédant l'image courante dans ladite séquence ; et, un vecteur de mouvement moyenné relativement à une image donnée étant un vecteur de mouvement obtenu à partir des vecteurs de mouvement sélectionnés associés à des images précédant ladite image donnée.

**2.** Procédé selon la revendication 1, suivant lequel la première image est l'image précédant directement l'image courante et la seconde image est l'image précédant directement ladite première image; et
suivant lequel l'étape de génération comprend le calcul d'une différence entre lesdits premier et second vecteurs de mouvement moyennés relativement à la première et seconde images pour obtenir l'accélération entre lesdits premier et second vecteurs de mouvement moyennés.

**3.** Procédé selon la revendication 1 ou 2, suivant lequel on additionne le premier vecteur de mouvement moyenné et l'accélération pour obtenir le vecteur de mouvement candidat correspondant au vecteur d'accélération.

**4.** Procédé selon l'une quelconque des revendications précédentes, suivant lequel, à l'étape de sélection, on sélectionne un nombre entier déterminé k de vecteurs de mouvement respectivement associés à k images précédant l'image courante dans la séquence d'images ; et
suivant lequel l'étape de génération comprend le calcul d'une moyenne de tout ou partie desdits k vecteurs de mouvement sélectionnés pour obtenir un vecteur de mouvement candidat moyenné.

**5.** Procédé selon l'une quelconque des revendications précédentes, suivant lequel, à l'étape de sélection, on sélectionne un nombre entier déterminé m de vecteurs de mouvement associés à m images précédant l'image courante ; suivant lequel, à l'étape de génération, on définit un vecteur de bruit et on additionne chacun des vecteurs de mouvement sélectionnés au vecteur de bruit, et on obtient, pour chaque vecteur de mouvement sélectionné, un vecteur de mouvement bruité respectif; et
suivant lequel l'étape de génération comprend en outre le calcul d'une moyenne desdits vecteurs de mouvement bruités respectifs pour obtenir un vecteur de mouvement candidat moyenné.

**6.** Procédé selon l'une quelconque des revendications précédentes, suivant lequel l'un des vecteurs de mouvement candidats correspond à un vecteur de mouvement nul.

**7.** Dispositif d'estimation de mouvement pour traiter des images se succédant dans une séquence d'images déterminées, dans lequel on associe un vecteur de mouvement à chacune des images traitées, le dispositif comprenant :

- une unité de sélection pour sélectionner des vecteurs de mouvement respectivement associés à des images précédant une image courante dans ladite séquence;
- une unité de génération de vecteurs de mouvement candidats à partir desdits vecteurs de mouvement sélectionnés;
- une unité d'élection pour élire un vecteur de mouvement parmi lesdits vecteurs de mouvement candidats;
- une mémoire pour mémoriser une information associant le vecteur de mouvement élu à l'image courante;
et dans lequel l'unité de génération est adaptée pour générer des vecteur de mouvement candidats comprenant au moins un vecteur d'accélération généré à partir de l'accélération entre d'une part un premier vecteur de mouvement moyenné relativement à une première image et d'autre part un second vecteur de mouvement moyenné relativement à une seconde image ;
lesdites première et seconde images étant distinctes et précédant l'image courante dans la séquence ; et,

un vecteur de mouvement moyenné relativement à une image donnée étant obtenu à partir des vecteurs de mouvement sélectionnés associés à des images précédant ladite image donnée dans la séquence d'images.

8. Dispositif selon la revendication 7, dans la première image est l'image précédant directement l'image courante et la seconde image est l'image précédant directement ladite première image; et
dans lequel l'unité de génération est adaptée pour calculer une différence entre lesdits premier et second vecteurs de mouvement moyennés relativement à la première et à la seconde images pour fournir l'accélération entre les premier et second vecteurs de mouvement moyennés.

9. Dispositif selon la revendication 7 ou 8, dans lequel l'unité de génération est adaptée pour additionner le premier vecteur de mouvement moyenné et l'accélération pour générer le vecteur de mouvement candidat correspondant au vecteur d'accélération.

10. Dispositif selon l'une quelconque des revendications 7 à 9, dans lequel l'unité de sélection est adaptée pour sélectionner un nombre, entier déterminé k de vecteurs de mouvement respectivement associés à k images précédant l'image courante dans la séquence d'images; et
dans lequel l'unité de génération est adaptée pour calculer une moyenne de tout ou partie desdits k vecteurs de mouvement sélectionnés afin de générer un vecteur de mouvement candidat moyenné.

11. Dispositif selon l'une quelconque des revendications 7 à 10, dans lequel l'unité de sélection est adaptée pour sélectionner un nombre entier déterminé m de vecteurs de mouvement associés à m images précédant l'image courante dans la séquence;
dans lequel l'unité de génération est adaptée pour additionner chacun des vecteurs de mouvement sélectionnés à un vecteur de bruit déterminé, afin de générer, pour chaque vecteur de mouvement sélectionné, un vecteur de mouvement bruité respectif; et pour fournir une moyenne desdits vecteurs de mouvement bruités respectifs afin de générer un vecteur de mouvement candidat moyenné.

12. Système d'estimation de mouvement comprenant un dispositif d'estimation de mouvement selon l'une quelconque des revendications 7 à 11 et une entité mobile pourvue d'un capteur d'images.

13. Procédé de poursuite de trajectoire d'un capteur mobile sur la base d'images d'un environnement fixe générées par ledit capteur, ledit procédé comprenant les étapes du procédé selon les revendications 1 à 6.

14. Dispositif de poursuite de trajectoire d'un capteur mobile comprenant des moyens adaptés pour mettre en oeuvre le procédé selon la revendication 13.

15. Système de poursuite de trajectoire d'un capteur mobile comprenant un dispositif selon la revendication 14 et une entité mobile pourvue d'un capteur d'images.

16. Souris optique comprenant un capteur mobile d'images et un dispositif d'estimation de mouvement adaptés pour coopérer afin de mettre en oeuvre le procédé selon la revendication 13.

17. Produit « programme d'ordinateur » chargeable directement dans la mémoire interne d'un ordinateur numérique, comprenant des portions de code de logiciel pour l'exécution des étapes du procédé selon l'une quelconque des revendications 1 à 6 ou la revendication 13 lorsque ledit programme est exécuté dans l'ordinateur.

FIG.1A.

FIG.1B.

FIG.2.

201 — SÉLECTIONNER DES VECTEURS DE MOUVEMENT ASSOCIÉS À DES IMAGES PRÉCÉDANTES

202 — GÉNÉRER DES VECTEURS DE MOUVEMENT CANDIDATS, AU MOINS UN VECTEUR CANDIDAT ÉTANT GÉNÉRÉ À PARTIR D'UNE ACCÉLÉRATION

203 — ÉLIRE UN VECTEUR DE MOUVEMENT

204 — MÉMORISER UNE ASSOCIATION VECTEUR ÉLU ET IMAGE COURANTE

FIG.3.

$V(N-1)$ $V_{cand-acc}^{(N)}$ 301

$V(N-2)$ A

FIG.4.

$V_7$ $V_8$ $V_1$

$V_6$ $V_2$

$V_3$

$V$ $V_5$ $V_4$

**Office européen des brevets**

**RAPPORT DE RECHERCHE EUROPEENNE**

Numéro de la demande

EP 05 29 2588

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/189548 A1 (ROVATI FABRIZIO ET AL) 9 octobre 2003 (2003-10-09) * alinéa [0036] - alinéa [0045] * * alinéa [0074] * ----- | 1-17 | INV. G06T7/20 |
| X | ROVATI F S ET AL: "Spatial-temporal motion estimation for image reconstruction and mouse functionality with optical or capacitive sensors" IEEE TRANSACTIONS ON CONSUMER ELECTRONICS IEEE USA, vol. 49, no. 3, août 2003 (2003-08), pages 711-718, XP002338468 ISSN: 0098-3063 * page 714, colonne de gauche, ligne 8 - ligne 19 * ----- | 1,7 | |

DOMAINES TECHNIQUES RECHERCHES (IPC)

G06T

Le présent rapport a été établi pour toutes les revendications

| Lieu de la recherche | Date d'achèvement de la recherche | Examinateur |
|---|---|---|
| La Haye | 13 avril 2006 | Chateau, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 2588

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

13-04-2006

| Document brevet cité au rapport de recherche | Date de publication | Membre(s) de la famille de brevet(s) | Date de publication |
|---|---|---|---|
| US 2003189548    A1 | 09-10-2003 | EP        1361541 A1 | 12-11-2003 |

EPO FORM P0460

Pour tout renseignement concernant cette annexe : voir Journal Officiel de l'Office européen des  brevets, No.12/82